(19) Europäisches Patentamt
European Patent Office
Office européen des brevets

(11) Veröffentlichungsnummer: **0 031 888**
**B1**

# (12) EUROPÄISCHE PATENTSCHRIFT

(45) Veröffentlichungstag der Patentschrift: **18.05.83**

(51) Int. Cl.³: **C 08 L 83/04** // D21H1/40

(21) Anmeldenummer: **80107103.6**

(22) Anmeldetag: **15.11.80**

## (54) Beschichtungsmittel und Verfahren zur Herstellung von klebrige Stoffe abweisenden Beschichtungen.

(30) Priorität: **28.11.79 DE 2947965**

(43) Veröffentlichungstag der Anmeldung: **15.07.81 Patentblatt 81/28**

(45) Bekanntmachung des Hinweises auf die Patenterteilung: **18.05.83 Patentblatt 83/20**

(84) Benannte Vertragsstaaten: **BE DE FR GB IT NL**

(56) Entgegenhaltungen:
**DE-A-2 922 295**
**FR-A-1 595 718**
**GB-A-980 875**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Friemann, Hans, Dr., Silesiusstrasse 82, D-5000 Köln 80 (DE)**
Erfinder: **Moretto, Hans-Heinrich, Dr., Formesstrasse 13, D-5000 Köln 80 (DE)**
Erfinder: **Alberts, Heinrich, Dr., Morgengraben 16, D-5000 Köln 80 (DE)**
Erfinder: **de Montigny, Armand, Dr., Walter-Flex-Strasse 17, D-5090 Leverkusen 1 (DE)**
Erfinder: **Toepsch, Hans, Dr., Am Wasserturm 20, D-5090 Leverkusen 3 (DE)**

**EP 0 031 888 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschichtungsmittel und Verfahren zur Herstellung von klebrige Stoffe abweisenden Beschichtungen

Die vorliegende Erfindung betrifft ein Beschichtungsmittel, bestehend im wesentlichen aus in organischen Lösungsmitteln gelösten hydroxylendblockierten Polyorganosiloxanen (A), einem Copfropfpolymerisat (E) aus im wesentlichen linearen Polyorganosiloxanen (1) und einem organischen Polymer (2), verknüpft über Brücken, die durch Polymerisation von einem oder mehreren mindestens eine aliphatische Doppelbindung aufweisenden Monomeren (3) zwischen den beiden Polymeren (1) und (2) entstehen, einem oder mehreren Vernetzern (B), die Vernetzung fördernde Katalysatoren (C) und ein Verfahren zur Herstellung von klebrige Stoffe abweisenden Beschichtungen durch Auftragen des Beschichtungsmittels auf klebrige Stoffe abweisend zu machende Oberflächen, wobei eine gegenüber mit üblichen Beschichtungsmitteln auf Siliconbasis beschichteten Oberflächen eine erhöhte Trennkraft zwischen den klebrigen Stoffen und den klebrige Stoffe abweisend zu machenden Oberflächen erzielt wird.

Es ist bekannt, dass man Oberflächen von Papier und anderen festen Stoffen mit Polyorganosiloxanen überziehen kann, und dass die Oberflächen dadurch für klebrige Stoffe abweisend werden (vgl. W. Noll, «Chemie und Technologie der Silicone», Weinheim 1968, S. 520, 521). In der US-PS 3 385 727 wird z.B. eine Zusammensetzung aus hydroxylendblockiertem Polydiorganosiloxan, Alkyltriacyloxysilan und einer organischen Zinnverbindung als die Vernetzung fördernder Katalysator beschrieben.

Aus der DE-AS 1 771 128 geht hervor, dass man für die Beschichtung von Oberflächen fester Stoffe auch Pfropfcopolymerisate aus Polydimethylsiloxan mit aufgepfropfter organischer Kette verwenden kann. Die damit beschichteten Papiere und Folien sind «sehr abweisend gegenüber Klebstoffen und klebrigen Substanzen aller Art.» (Spalte 7, Zeile 61 ff).

Für verschiedene Anwendungen sind jedoch Siliconbeschichtungen mit abgestufter klebstoffabweisender Wirkung vorteilhaft. So ist es für doppeltbeschichtete Trennpapiere zwischen den Schichten aufgerollter Doppelklebebänder von Bedeutung, dass die klebstoffabweisenden Kräfte auf den beiden Seiten des Trennpapiers unterschiedlich sind. Hierdurch kann dem Verbraucher ein Doppelklebeband zur Verfügung gestellt werden, bei dem durch das Abrollen zunächst nur eine Klebeschicht freigelegt wird.

Solche klebstoffabweisenden Beschichtungen mit erhöhten Trennkräften sind in DE-OS 2 509 620 für Systeme beschrieben, deren Vernetzung auf dem Prinzip der katalytischen Si-H-Addition an Si-Vinyl-Gruppen beruht. Die hierfür bevorzugt verwendeten Platinkatalysatoren werden in kleinsten Mengen (bis 50 ppm, bezogen auf das Siloxan) eingesetzt und sind deshalb stark durch Vergiftungen gefährdet. So genügt z.B. ein kurzzeitiger Kontakt dieser Systeme mit schwefelhaltigen Kontaktwalzen des Auftragswerks, um die Aktivität bei der Durchhärtung drastisch zu verringern. Ein weiteres ernst zu nehmendes Katalysatorgift sind Zinnverbindungen, wie sie in der überwiegenden Mehrzahl aller Beschichtungsmittel vorkommen. Deshalb können Beschichtungsmaschinen, mit denen üblicherweise solche klassischen, Zinn-katalysierten Beschichtungsmittel aufgetragen werden, jeweils nur nach sorgfältigster Reinigung auf Platin-katalysierte Systeme umgestellt werden.

Der Erfindung lag also die Aufgabe zugrunde, ein Beschichtungsmittel für feste Stoffe auf der Basis eines Zinn-katalysierten Systems aus hydroxylendblockierten Polysiloxanen und Vernetzern zu schaffen, deren klebstoffabweisende Wirkung schwächer ist, als die der bisher üblichen Siliconbeschichtungsmittel.

Es sollte also ein Beschichtungsmittel für feste Stoffe, wie z.B. Papier geschaffen werden, das nach dem Kontakt zu klebrigen Stoffen gegenüber den bisher üblichen Beschichtungsmitteln erhöhte Kräfte zum Abtrennen der klebrigen Stoffe vom Untergrund erforderlich macht.

Die Aufgabe wurde dadurch gelöst, dass man im üblichen Siliconbeschichtungssystem aus in organischen Lösungsmitteln gelösten hydroxylendblockierten Polydiorganosiloxanen, Vernetzern und die Vernetzung fördernden Katalysatoren einen Teil des hydroxylendblockierten Polydiorganosiloxans durch Copfropfpolymerisate aus Polydiorganosiloxan und einem organischen Polymer, verknüpft über Brücken, die bei der Polymerisation von aliphatische Doppelbindungen aufweisenden Monomeren zwischen den beiden Polymeren entstehen ersetzt.

Gegenstand der vorliegenden Erfindung ist also ein Beschichtungsmittel zur Herstellung von klebrige Stoffe abweisenden Beschichtungen mit erhöhten Trennkräften bestehend aus

A) 10 Gew.-Tln hydroxylendblockierten Polyorganosiloxane der Viskosität von $10^2$ bis $5 \cdot 10^4$ Pa.·s,

B) 0,5–5 Gew.-Tln eines oder mehrerer Vernetzer der Formel $RSiX_3$,

wobei X eine hydrolysierbare Gruppe und R eine Alkyl-, Alkenyl-, Aryl- oder Aminoalkyl-Gruppe mit 1–12 C-Atomen ist,

C) 0,1–2 Gew.-Tln einer organischen Zinnverbindung als Katalysator,

D) 100–500 Gew.-Tln eines organischen Lösungsmittels, dadurch gekennzeichnet, dass es zusätzlich

E) 0,1–20 Gew.-Tle eines Copfropfpolymerisats enthält, das durch Polymerisation von

1. 10–60 Gew.-Tle – bezogen auf Bestandteil E – eines oder mehrerer mindestens eine aliphatische Doppelbindung aufweisender Monomerer in Gegenwart von

2. 25–75 Gew.-Tle eines im wesentlichen linearen hydroxylendblockierten Polyorganosiloxans mit einer Viskosität von 100 bis 500 000 mPa·s, und

3. 10–70 Gew.-Tle eines oder mehrerer organischer Polymerer mit einem Molekulargewicht von 500 bis 100 000, wobei die Summe der Gewichtsteile von 1–3 100 ist,
hergestellt worden ist.

Gegenstand der vorliegenden Erfindung ist ferner ein Verfahren zur Herstellung von klebrige Stoffe abweisenden Beschichtungen mit erhöhten Trennkräften durch Auftragen des erfindungsgemässen Beschichtungsmittels.

Die hydroxylendblockierten Polyorganosiloxane (A) sind im wesentlichen lineare Polydimethylsiloxane, die in untergeordnetem Masse auch Phenyl-, Ethyl- oder Vinylgruppen enthalten können. Als Vernetzer (B) wird in dem erfindungsgemässen Beschichtungsmittel Methyl-, Äthyl-, Vinyltriace toxysilan, Methyltricyclohexylaminosilan, Methyltributylaminosilan, vorzugsweise ein Gemisch aus Vinyltriacetoxysilan und Cyclohexylaminomethyltriethoxysilan eingesetzt. Der Katalysator (C) ist eine organische Zinnverbindung des Typs $R_2'SnX_2$, wobei R' eine Alkyl- oder Alkenylgruppe, wie z.B. Butyl ist und X eine hydrolysierbare Gruppe ist, vorzugsweise Acetat, Octoat oder Laurat.

Als Lösungsmittel (D) wird normalerweise Toluol verwendet, es können aber auch andere organische Lösungsmittel wie z.B. Xylol, Benzol, Hexan oder Petroläther eingesetzt werden, wenn sie genügend leicht flüchtig sind.

Die erfindungsgemäss verwendeten Copfropfpolymerisate (E) bestehen aus

1. im wesentlichen linearen hydroxylendblokkierten Polyorganosiloxane, vorzugsweise Polydimethylsiloxanen, die neben den Methylgruppen bis max. 30 Mol% Phenyl-, Ethyl- oder Vinylgruppen enthalten können, mit einer Viskosität vorzugsweise zwischen 1 und 50 Pa·s,

2. organischen Polymeren wie Polyester, Polyether, Polyurethan, Polyamid, Polycarbonat, Polyharnstoff, wobei vorwiegend lineare Polyester aus aliphatischen oder aromatischen Dicarbonsäuren wie Adipinsäure, Sebacinsäure, Terephthalsäure, Phthalsäure, Isophtalsäure, Malonsäure, Maleinsäure, Fumarsäure, Bernsteinsäure, Glutarsäure oder Itaconsäure und aliphatischen oder aromatischen Diolen wie Glykol, Propandiol-1,2 und -1,3, Butandiol-1,3 und -1,4, Hexandiol-1,6, 2,2-Dimethylpropandiol-1,3 und Polyethylen- und Polypropylenglykole, oder mehrwertige aliphatische Alkohole, die 2–7 Etheratome im Molekül enthalten (vgl. DE-AS 1 054 620), die verschiedenen Hydroxykresolen oder Hydroxyphenolen (vgl. Ullmanns Enzyclopädie der technischen Chemie, 14. Band, Urban und Schwarzenberg, S. 80 ff., München 1963), sowie Polyether, die in bekannter Weise durch Polymerisation von Ethylenoxid und Propylenoxid hergestellt werden, eingesetzt werden. Als

3. Monomere seien beispielhaft aufgeführt: Olefine wie Ehtylen, Propylen, Isobutylen, Vinylester aliphatischer oder aromatischer Carbonsäuren, vorzugsweise Vinylacetat oder Vinylpropionat, α,β-ungesättigte Mono- oder Dicarbonsäuren und ihre Derivate, wie (Meth)-acrylsäure, Methyl(meth)-acrylat, Ethyl(meth)acrylat, Butyl(meth)acrylat, Acrylamid oder Acrylnitril, Styrol, Methylstyrol, 4-Chlorstyrol, Vinylchlorid, Vinylidenchlorid oder -fluorid, Vinylether, wie Ethylvinylether oder Butylvinylether, Alkylacetat oder Alkylethylcarbonat. Vorzugsweise wird Vinylacetat oder ein Gemisch aus Styrol und Butylacrylat eingesetzt.

Die Herstellung der Copfropfpolymerisate (E) erfolgt in der Weise, dass das mindestens eine aliphatische Doppelbindung aufweisende Monomere (3) durch Radikalbildner wie z.B. Butylperoxid, Dicumylperoxid, Dibenzoylperoxid, tert.-Butylperpivalat oder Azo-bis-isobuttersäurenitril oder UV-Licht in Gegenwart von (1) und (2) polymerisiert wird.

Überraschenderweise erzeugen die beschriebenen Copfropfpolymerisate als Zusatz in klebrige Stoffe abweisenden Beschichtungsmitteln auf Basis von hydroxylendblockierten Polyorganosiloxanen, einem oder mehreren Vernetzern und einem oder mehreren die Vernetzung fördernden Katalysatoren Trennkräfte zwischen dem klebrigen Stoff und der mit dem erfindungsgemässen Beschichtungsmittel behandelten Oberfläche, die nicht nur höher sind als die Trennkräfte zwischen dem klebrigen Stoff und einer mit einem Beschichtungsmittel ohne den Zusatz von Copfropfpolymerisaten behandelten Oberfläche, sondern diese Kräfte auch über längere Lagerzeit nicht verändern.

Anhand der vorliegenden Beispiele wird die Erfindung näher erläutert.

Die Angabe in Tln bezieht sich jeweils auf Gewichtsteile.

Beispiel 1 a:

Herstellung eines Copfropfpolymerisats aus Polydimethylsiloxan, Polyester und Vinylacetat

340 Tle eines hydroxylendblockierten Polydimethylsiloxans mit
einer Viskosität von 5 Pa·s und

200 Tle eines Polyesters aus Adipinsäure und Diethylenglykol mit
einer OH-Zahl von 40

werden unter starkem Rühren auf 110 °C erwärmt. Bei dieser Temperatur tropft man gleichzeitig aus 2 Tropftrichtern im Verlaufe von 2 Std.

200 Tle Vinylacetat und

60,6 Tlen einer Lösung von 0,6 Tln tert.-Butylperpivalat in 60 Tln hydroxylendblockiertem Polydimethylsiloxan mit einer Viskosität von 5 Pa·s.

Nach der Zugabe wird die Mischung weitere 2 Std. bei 110 °C gerührt, anschliessend auf 130 °C erwärmt und im Vakuum von flüchtigen Anteilen befreit. Der Rückstand besteht aus 770 Tln einer weissen Masse mit einer Viskosität von 50 Pa·s.

Beispiel 1 b

Herstellung eines Copfropfpolymerisats aus Polydimethylsiloxan, Polyester, Styrol und Butylacrylat

300 Tle eines hydroxylendblockierten Polydimethylsiloxans mit
einer Viskosität von 5 Pa·s

150 Tle eines Polyesters aus Adipinsäure, Butandiol-1,4 und Ethylenglykol mit einer OH-Zahl von 55
werden unter starkem Rühren auf 110 °C erwärmt. Bei dieser Temperatur tropft man gleichzeitig aus 2 Tropftrichtern im Verlauf von 2 Std.

300 Tle einer Mischung
200 Tln Styrol und
100 Tln Butylacrylat und
50,6 Tle einer Mischung aus
50 Tln hydroxylendblockiertem Polydimethylsiloxan mit einer Viskosität von 5 Pa·s und 0,6 Tln tert.-Butylperpivalat.

Nach der Zugabe wird die Mischung weitere 2 Std. bei 100 °C gerührt, anschliessend auf 130 °C erwärmt und im Vakuum von flüchtigen Anteilen befreit. Der Rückstand besteht aus 765 Tln einer weissen Masse mit einer Viskosität von 50 Pa·s.

Herstellung von Papierbeschichtungen

Beispiel 1 c
7 Tle eines hydroxylendblockierten Polysiloxans mit einer Viskosität von $10^3$ Pa·s

3,5 Tle eines Copfropfpolymerisats aus Beispiel 1 a
1 Teil Vinyltriacetoxysilan
0,1 Tle Dibutylzinndiacetat
0,3 Tle Cyclohexylaminomethyltriethoxysilan werden in
300 Tln Toluol gelöst.

Die Lösung wird mittels eines Glasrakels auf ein Kraftpapier von 75 g/$m^2$ aufgetragen. Das beschichtete Papier wird 15 sec auf 150 ° C erhitzt.

Beispiel 2
7 Tle eines hydroxylendblockierten Polysiloxans mit einer Viskoistät von $10^3$ Pa·s

3,5 Tle eines Copfropfpolymerisats aus Beispiel 1 b
1 Teil Vinyltriacetoxysilan
0,1 Tle Dibutylzinndiacetat
0,3 Tle Cyclohexylaminomethyltriethoxysilan werden in 300 Tln Toluol gelöst.

Mit dieser Lösung wird ebenso wie in Beispiel 1 c das gleiche Kraftpapier beschichtet.

Beispiel 3 (Vergleichsbeispiel):
10 Tle eines hydroxylendblockierten Polysiloxans mit einer Viskosität von $10^3$ Pa·s
1 Teil Vinyltriacetoxysilan
0,1 Tle Dibutylzinndiacetat
0,3 Tle Cyclohexylaminomethyltriethoxysilan werden in
300 Tln Toluol gelöst.

Mit dieser Lösung wird ebenso wie in Beispiel 1 c das gleiche Kraftpapier beschichtet.

Zur Messung der adhäsiven Wirkung der Beschichtung werden die Papiere mit Klebestreifen (25 mm Tesafilm 104 der Fa. Beiersdorf AG, Hamburg) beklebt. Nach einer Lagerung bis zu 7 Tagen bei Raumtemperatur werden die Haftkräfte über eine Abzugsvorrichtung gemessen. (s. Tabelle).

| Lagerbedingungen | | Kräfte: | | |
|---|---|---|---|---|
| Zeit | Temperatur | Beispiel 1c | Beispiel 2 | Beispiel 3 |
| [d] | [°C] | [mN/cm] | [mN/cm] | [mN/cm] |
| 0 | 25 | 0 | 40 | 0 |
| 1 | 25 | 102 | 190 | 0 |
| 1 | 60 | 330 | 620 | 9 |
| 7 | 25 | 176 | 218 | 0 |

Beispiel 4
Auf einer Papierbeschichtungsmaschine wurden die
a) nach Beispiel 1 c
b) nach Beispiel 2
c) nach Beispiel 3 (Vergleichsbeispiel)
hergestellten Papierbeschichtungsmittel auf Kraftpapier aufgetragen und bei 140 °C ausgehärtet.

Es bildet sich jeweils ein dünner, gut ausgehärteter Film.

Die Trennwerte wurden mit Hilfe von Tesaband Nr. 651 und 25 mm Breite gemessen.

Beispiel:

| Zeit | 4 a | 4 b | 4 c |
|---|---|---|---|
| Wochen | [mN/cm] | [mN/cm] | [mN/cm] |
| 1 | 781 | 528 | 215 |
| 4 | 1240 | 597 | 477 |

**Patentansprüche**

1. Beschichtungsmittel zur Herstellung von klebrige Stoffe abweisenden Beschichtungen mit erhöhten Trennkräften, bestehend aus

A) 10 Gew.-Tln hydroxylendblockierter Polyorganosiloxane der Viskosität von $10^2$ bis $5 \cdot 10^4$ Pa·s,

B) 0,5–5 Gew.-Tln eines oder mehrerer Vernetzer der Formel

$RSiX_3$,

wobei X eine hydrolysierbare Gruppe und R eine Alkyl-, Alkenyl-, Aryl- oder Aminoalkyl-Gruppe mit 1–12 C-Atomen ist,

C) 0,1–2 Gew.-Tln einer organischen Zinnverbindung als Katalysator,

D) 100–500 Gew.-Tle eines organischen Lösungsmittels, dadurch gekennzeichnet, dass es zusätzlich

E) 0,1–20 Gew.-Tle eines Copfropfpolymerisats enthält, das durch Polymerisation von

1. 10–60 Gew.-Tle – bezogen auf Bestandteil E – eines oder mehrerer mindestens eine aliphatische Doppelbindung aufweisender Monomerer in Gegenwart von
2. 25–75 Gew.-Tle eines im wesentlichen linearen hydroxylendblockierten Polyorganosiloxans mit einer Viskosität von 100 bis 500 000 mPa·s, und
3. 10–70 Gew.-Tle eines oder mehrerer organischer Polymerer mit einem Molekulargewicht von 500 bis 100 000,

wobei die Summe der Gewichtsteile von 1–3 100 ist,

hergestellt worden ist.

2. Beschichtungsmittel nach Anspruch 1, dadurch gekennzeichnet, dass das organische Polymer ein Polyester ist.

3. Beschichtungsmittel nach Anspruch 1, dadurch gekennzeichnet, dass das organische Polymer ein Polyether ist.

4. Beschichtungsmittel nach einem der Ansprüche 1–3, dadurch gekennzeichnet, dass das eine aliphatische Doppelbindung aufweisende Monomere Vinylacetat ist.

5. Beschichtungsmittel nach einem der Ansprüche 1–3, dadurch gekennzeichnet, dass die eine aliphatische Doppelbindung aufweisenden Monomeren ein Gemisch aus Styrol und Butylacrylat sind.

6. Verfahren zur Herstellung von klebrige Stoffe abweisenden Beschichtungen mit erhöhten Trennkräften, dadurch gekennzeichnet, dass man Beschichtungsmittel nach einem der Ansprüche 1 bis 5 aufträgt.

**Revendications**

1. Agent de revêtement pour la fabrication de revêtements répulsifs envers les substances collantes avec des forces de séparation plus élevées, consistant en:

A) 10 parties en poids d'un polyorganosiloxane à hydroxyles terminaux bloqués, ayant une viscosité de $10^2$ à $5 \cdot 10^4$ Pa·s,

B) 0,5–5 parties en poids d'un ou plusieurs réticulants de formule

$RSiX_3$,

dans laquelle X est un groupe hydrolysable et R un groupe alcoyle, alcényle, aryle ou aminoalcoyle ayant 1 à 12 atomes de carbone,

C) 0,1–2 parties en poids d'un composé organique d'étain comme catalyseur,

D) 100–500 parties en poids d'un solvant organique, caractérisé en ce que supplémentairement il contient

E) 0,1–20 parties en poids d'un copolymère greffé préparé par polymérisation de

1. 10 à 60 parties en poids par rapport au constituant E d'un ou plusieurs monomères présentant au moins une double liaison aliphatique, en présence de
2. 25–75 parties en poids d'un polyorganosiloxane à hydroxyles terminaux bloqués essentiellement linéaire ayant une viscosité de 100 à 500 000 mPa·s et
3. 10–70 parties en poids d'un ou plusieurs polymères organiques ayant un poids moléculaire de 500 à 100 000, la somme des parties en poids de 1–3 étant de 100.

2. Agent de revêtement selon la revendication 1, caractérisé en ce que le polymère organique est un polyester.

3. Agent de revêtement selon la revendication 1, caractérisé en ce que le polymère organique est un polyéther.

4. Agent de revêtement selon l'une des revendications 1–3, caractérisé en ce que le monomère présentant une double liaison aliphatique est de l'acétate de vinyle.

5. Agent de revêtement selon l'une des revendication 1–3, caractérisé en ce que les monomères présentant une double liaison aliphatique sont un mélange de styrène et d'acrylate de butyle.

6. Procédé de fabrication de revêtements répulsifs envers les substances collantes ayant des forces de séparation plus élevées, caractérisé en ce que l'on applique un agent de revêtement selon l'une des revendications 1 à 5.

**Claims**

1. Coating composition for the production of coatings which are repellent towards sticky substances and have increased peeling forces, consisting of

A) 10 parts by weight of polyorganosiloxanes with hydroxyl end groups and with a viscosity of $10^2$ to $5 \cdot 10^4$ Pa·s,

B) 0.5–5 parts by weight of one or more cross-linking agents of the formula

$RSiX_3$,

wherein

X is a hydroxysable group and

R is an alkyl, alkenyl, aryl or aminoalkyl group with 1–12 C atoms,

C) 0.1–2 parts by weight of an organic tin compound as the catalyst, and

D) 100–500 parts by weight of an organic solvent, characterised in that it additionally contains

E) 0.1–20 parts by weight of a graft copolymer which has been produced by the polymerisation of

1. 10–60 parts by weight, based on constituent E, of one or more monomers containing at least one aliphatic double bond, in the presence of
2. 25–75 parts by weight of an essentially linear polyorganosiloxane with hydroxyl end groups and with a viscosity of 100 to 500 000 mPa·s, and
3. 10–70 parts by weight of one or more organic polymers with a molecular weight of 500 to 100 000 the sum of the parts by weight of 1–3 being 100.

2. Coating composition according to Claim 1, characterised in that the organic polymer is a polyester.

3. Coating composition according to Claim 1, characterised in that the organic polymer is a polyether.

4. Coating composition according to one of Claims 1–3, characterised in that the monomer containing an aliphatic double bond is vinyl acetate.

5. Coating composition according to one of Claims 1–3, characterised in that the monomers containing an aliphatic double bond are a mixture of styrene and butyl acrylate.

6. Process for the production of coating which are repellent towards sticky substances and have increased peeling forces, characterised in that coating compositions according to one of Claims 1 to 5 are applied.